# EUROPEAN PATENT APPLICATION

(11) **EP 0 588 755 A1**
(43) Date of publication of application: **23.03.1994**
(21) Application number: 93650013.1
(22) Date of filing: 02.04.1993
(51) Int. Cl.: B60R 25/04

(54) **An engine immobilizing device for a vehicle**

(30) Priority: 16.09.1992 IE 266592
(71) Applicant: PATCOL LIMITED, Sligo, County Sligo (IE)
(72) Inventor: McClean, Colm, County Down, Northern Ireland (GB)
(74) Representative: Kelly, Peter F.

(57) **Abstract**

An engine immobilizing device for a mechanically propelled vehicle of the type which comprises an immobilizer key consisting of a dielectric plate bedded in and projecting from a plastics grip or handle and having the necessary conductors plated printed or otherwise deposited onto one face thereof. The circuit-interrupting circuit (1) has two socket plates (11, 12) defining between them a slot (13) wherein the terminals (15) are mounted. The circuit-restoring key (2) comprises a grip (20) which has two key plates (21, 22) enclosing between them and protecting a groove-like space (23). The dielectric plate (24) is mounted in the space (23) and the plates (21, 22) project into the space (23). The key plates (21, 22) are shaped and are spaced so as to be unobstructed by the socket plates (11, 12) when the key (2) into the socket (1) namely when the dielectric plate (24) is inserted into slot (13).

## Description

This invention relates to an engine immobilizing device for a mechanically propelled vehicle. In particular it relates to a multiple circuit-interrupting socket assembly mountable in a vehicle, and a cooperating multiple circuit-restoring key which can be removed and retained by the driver, the combination of socket assembly and key being referred to hereinafter as an immobilizer.

An immobilizer is known for installing in which a number (x) of important electrical circuits of a vehicle are broken to produce twice that number (2x) of wire ends which are then connected separately to respective members of an array of terminals in a circuit interrupting socket mounted inside the vehicle, and wherein a portable circuit-restoring key comprises a dielectric plate insertable in the socket, and bearing the aforementioned larger number (2x) of conductors for connection with respective said terminals, pairs of said conductors being connected together with the key so that in use of the immobilizer the original circuits (x in number) are restored. Such an engine immobilizing device is hereinafter called an immobilizer of the kind described. The security value of the known immobilizer resides in the large number of possible combinations of the terminals, two at a time, only one of which combinations restores the original circuits and corresponds to the configuration of the key.

Known immobilizer keys comprise a dielectric plate bedded in and projecting from a plastics grip or handle, and having the necessary conductors plated, printed or otherwise deposited onto one face thereof. Since they are commonly carried about on the person of a driver, they are subject to erosion against loose objects carried in the driver's pocket, tending to wear the conducting strips of the dielectric plate. The plate itself is vulnerable to breakage, chipping or bending on account of its exposure. The invention seeks to overcome these disadvantages.

The invention accordingly provides an immobilizer of the kind described,
characterized in that the circuit-interrupting socket comprises two socket plates defining between them a slot wherein the terminals are mounted, and that the circuit-restoring key comprises a grip having two key plates enclosing between them and thereby protecting a groove-like space in which the dielectric plate is mounted and into which said plate projects, and that the key plates are shaped and spaced so as to be unobstructed by the socket plates during insertion of the key into the socket, which essentially involves insertion of the dielectric plate into the slot.

Preferably the socket plates are united by at least one bridging partition which extends within the slot in the direction of key insertion, and the dielectric plate is correspondingly slotted between conductors to permit its insertion into the socket despite the presence of said partition. As there are several possible inter-conductor positions for the slot/bridge arrangement, this provision multiplies the numbers of possible key configurations and thereby enhances the security value of the immobilizer. Two or more such bridging partitions with corresponding slots in the dielectric plate are possible. Thus with a dielectric plate bearing eight parallel conductors, two, three, five, six or seven slots may be provided, with for each of them a corresponding bridging partition within the slot of the socket.

Suitable vehicle electric circuits for interruption and connection to an immobilizer of the invention are the ignition circuit, the fuel injection circuit, the fuel pump circuit and the horn circuit. A useful embodiment of the invention is adapted to make and break four vehicle circuits, having eight terminals in the socket and eight conductors, connected together in pairs, in the key.

The invention will be understood in greater detail from the following description of a particular and preferred embodiment thereof, given by way of non-limiting example only, with reference to the accompanying drawings, in which:

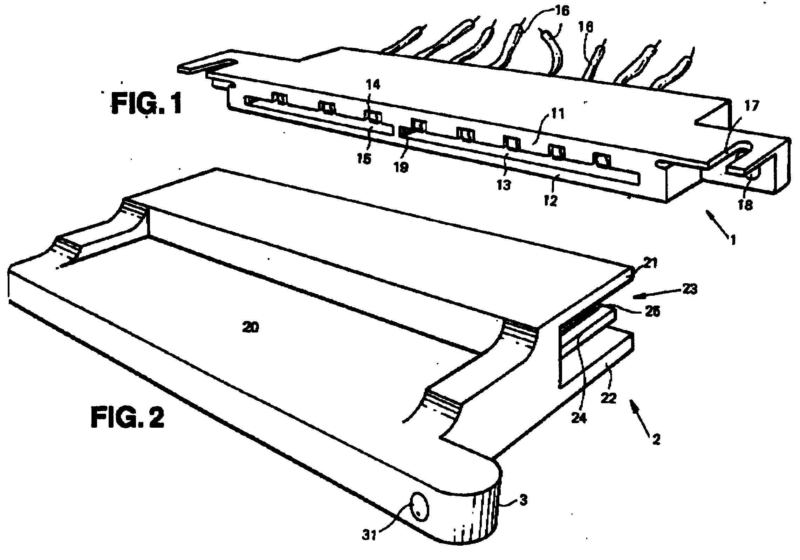

- Fig 1: is a perspective view of a circuit-interrupting socket,
- Fig 2: is a perspective view of a circuit-restoring key,
- Fig 3: is a side elevation of the key of Fig 2,
- Fig 4: is a cross-section of the socket of Fig 1 (Fig 4(a) and the key of Fig 2 (Fig 4(b)), taken through one of the terminals of the socket and the associated conductor of the key, and
- Fig 5: is an underneath plan view of the key of Fig 2.

Referring now to the drawings, not to scale, a vehicle engine immobilizer comprises a socket 1 and a cooperating key 2, the body of each of which is made from hard poly(vinyl chloride) by injection moulding. The socket 1 comprises socket plates 11, 12 defining a slot 13 within which, in eight equally spaced apart recesses 14, are mounted eight respective electrical terminals 15, each connected to a respective insulated wire lead 16 for onward connection to one wire of the eight arising from the breaking of four important electrical circuits of the vehicle. Each terminal 15 is spring-biased into prominence within the slot 13, for positive clamping reception of the key 2 in use.

The socket 1 is adapted to be secured to an interior surface in the vehicle by means of end extensions which bear slots 17 and holes 18 for use with screws, rivets or the like fastening means. The slot 13 is interrupted by a partition 19 between the third and fourth of the terminals 15.

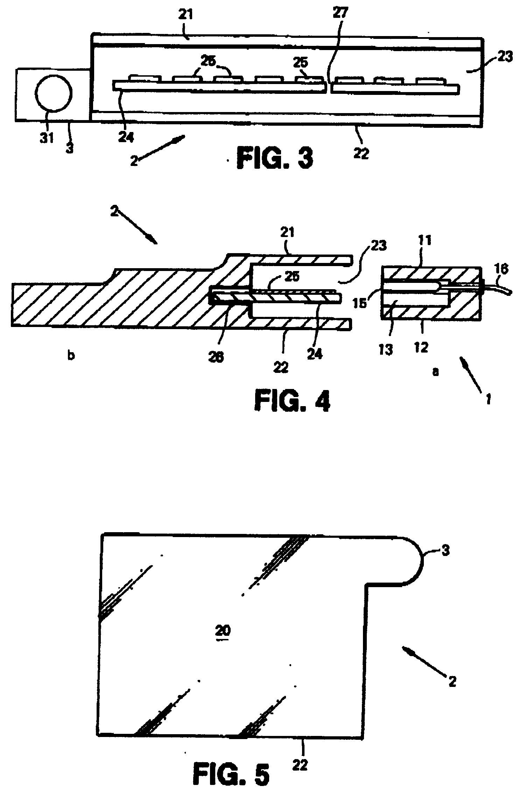

The key 2 comprises a grip 20 with a perforated end extension 3 having a perforation 31 for use in linking the key 2 to a key ring. It also comprises key plates 21, 22 which enclose a space 23. A dielectric plate 24 bearing eight parallel conductors 25 is adhesively and elastically secured in a base trench 26 shown in phantom in Fig 4, so that the conductors 25 are deployed on the part of the plate 24 that projects into the space 23. The relevant dimensions of the socket 1 and key 2 are matched so that the key 2 embraces the outside faces of the sockets 1 and each conductor 25 makes positive contact with a respective terminal 15 when the dielectric plate 24 is inserted into the slot 13. The plate 24, in use in the slot 13, is a push fit and is held securely enough to withstand all the normal shocks and vibrations associated with vehicle travel, by the spring bias of the terminals 15 in the socket 1.

The dielectric plate comprises a slot 27 between the third and fourth conductor 25 to accommodate the partition 19 between the third and fourth of the terminals 15 in the slot 13 of the socket 1. The provision improves the security of the immobilizer as unauthorized keys cannot even be tried unless their dielectric plates are slotted to correspond with the partition 19.

The dielectric plate 24 (or "biscuit") is a printed circuit board (PCB) whereon the eight parallel conductors 25 are connected together in four pairs to form U-shapes, the bridge portion of the U being effectively concealed from view within the space 23 and indeed partly buried in the base trench 26. Where the topology of these U-shapes prevents connection of a particular pair of conductors on the printed face of PCB, they can be united by a wire connection on the opposite face thereof, its ends led through small bores in the PCB and soldered to respective printed conductors 25.

For installation of the immobilizer the socket 1 is fixed to or underneath the vehicle dashboard. Four important vehicle circuits are accessed by locating a respective lead involved in each of them, cutting the leads and connecting the resulting eight wire ends to respective wire leads 16 of the socket 1, according to a predetermined distribution which depends on the electrical configuration of the particular key 2 proposed to be used, said configuration being made known in confidence to the purchaser of the immobilizer, who can dispense with that information or a record thereof once the connections have been made. Several hundred key configurations are possible where eight leads and four circuits are involved, and only one of these configurations is effective for a given immobilizer.

In use of the immobilizer, the key 2 is inserted in the socket 1 before any circuit is switched on prior to vehicle operation. When leaving the vehicle, the driver unplugs the key 2 and pockets it. The key plates 21, 22 ensure that the dielectric plate 24 is adequately protected against knocks and abrasion.

## Claims

1. An engine immobilizing device of the kind described, characterized in that the circuit-interrupting socket (1) comprises two socket plates (11, 12) defining between them a slot (13) wherein the terminals (15) are mounted, and that the circuit-restoring key (2) comprises a grip (20) having two key plates (21, 22) enclosing between them and thereby protecting a groove-like space (23) in which the dielectric plate (24) is mounted and into which space (23) said plate (24) projects, and in that the key plates (21, 22) are shaped and spaced so as to be unobstructed by the socket plates (11, 12) during insertion of the key (2) into the socket (1), which essentially involves insertion of the dielectric plate (24) into the slot (13).

2. A device according to Claim 1, characterized in that the socket plates (11, 12) are united by at least one bridging partition (19), which extends within the slot (13) in the direction of key insertion, and in that the dielectric plate (24) is correspondingly slotted between conductors (14) to permit its insertion into the socket (2) normally despite the presence of said partition (19).

3. A device according to Claim 1 or 2, characterized in that it has eight terminals (15) in the socket (1) and eight conductors (25), connected together in pairs, in the key (2), and is consequently adapted for making and breaking four important electrical circuits of a vehicle.

4. A device according to any preceding claim, characterized in that the terminals (15) are spring-biased into prominence within the slot (13) of the socket (1), the bias serving to grasp and secure the dielectric plate (24) of the key (2) on insertion and thereafter.

5. A device according to any preceding claim wherein the grip (20) comprises a perforated end extension (3) having a perforation (31) for use in linking the key (2) to a key ring.
